# EUROPEAN PATENT APPLICATION

(11) **EP 2 832 968 A1**
(43) Date of publication of application: **04.02.2015**
(21) Application number: 12872494.5
(22) Date of filing: 30.03.2012
(51) Int. Cl.: F02B 37/18, F02B 39/16

(54) **CONTROL DEVICE FOR INTERNAL COMBUSTION ENGINE**

(71) Applicant: Toyota Jidosha Kabushiki Kaisha, Toyota-shi, Aichi-ken 471-8571 (JP)
(72) Inventor: MATSUI, Hiroki, Toyota-shi Aichi 471-8571 (JP)
(74) Representative: Smith, Samuel Leonard
(86) International application number: PCT/JP2012/058648
(87) International publication number: WO 2013/145278

(57) **Abstract**

The minimum value for the degree of opening of a wastegate valve (24), wherein the flow volume of exhaust air flowing via a wastegate port (22) when the degree of opening of the wastegate valve (24) is changed toward the open side stops increasing, is defined as a first prescribed degree of opening. An electronic control device (50) controls the degree of opening of the wastegate valve (24) on the basis of the engine operating state, and when the vehicle is running steadily at a high speed, that is, when the degree of opening of the wastegate valve (24) which has been set on the basis of the engine operating state is equal to or greater than the first prescribed degree of opening, the degree of opening of the wastegate valve (24) is varied between values equal to or greater than the first prescribed degree of opening.

## Description

### TECHNICAL FIELD

The present invention relates to a control device for an internal combustion engine that includes a turbocharger.

### BACKGROUND ART

An internal combustion engine that includes a turbocharger (hereinafter, forced induction device) is known in the art (for example, refer to patent document 1). A forced induction device includes a turbine and a compressor, which is driven by the turbine. The turbine includes a turbine housing, which is arranged in an exhaust passage, and a turbine wheel, which is encased in the turbine housing.

Additionally, the forced induction device includes a wastegate mechanism that allows exhaust gas to bypass the turbine wheel and be discharged. The wastegate mechanism includes a wastegate port that bypasses the turbine wheel and a wastegate valve that opens and closes the wastegate port. For example, when the pressure of the exhaust gas delivered to the turbine wheel is greater than or equal to a predetermined value, the exhaust gas is discharged through the wastegate port by opening the wastegate valve. This avoids the application of excessive pressure to the turbine wheel, and limits excessive increases of the boost pressure.

In the internal combustion engine, a porous exhaust gas purification catalyst that purifies the exhaust gas is arranged at a downstream side of the turbine, which is arranged in the exhaust passage.

### PRIOR ART DOCUMENT

### PATENT DOCUMENT

Patent Document 1: Japanese Laid-Open Patent Publication No. 2007-247560

### SUMMARY OF THE INVENTION

### PROBLEMS THAT ARE TO BE SOLVED BY THE INVENTION

An internal combustion engine may use fuel including a metal such as manganese. In this case, since the exhaust gas includes the above metal, the metal is deposited on the exhaust gas purification catalyst. It is difficult to process the deposited metal, which may clog the exhaust gas purification catalyst. Due to limitations imposed on the layout of the exhaust system, there is a tendency for exhaust gas to strike a particular portion at the inlet of the exhaust gas purification catalyst. Thus, local clogging may occur. This may cause early deterioration of the performance of the exhaust gas purification catalyst.

It is an object of the present invention to provide a control device for an internal combustion engine that accurately limits the local clogging of an exhaust gas purification catalyst.

### MEANS FOR SOLVING THE PROBLEM

To achieve the above object, a control device for an internal combustion engine according to the present invention is applied to the internal combustion engine that includes a turbocharger and an exhaust gas purification catalyst. The turbocharger includes a turbine arranged in an exhaust passage and a wastegate mechanism including a port, which bypasses a turbine wheel of the turbine, and a valve, which opens and closes the port. The exhaust gas purification catalyst is located at a downstream side of the turbine with respect to exhaust gas. The control device controls an open degree of the valve. When the engine is running, the open degree of the valve is changed in a range greater than or equal to a minimum open degree that is a minimum value of the open degree of the valve at which a flow rate of the exhaust gas flowing through the port stops increasing when the open degree of the valve is changed to an opening side.

In this structure, when the engine is running, the open degree of the wastegate valve changes between the minimum open degree and a value greater than the minimum open degree. This changes the flow direction of the exhaust gas discharged through the port so that the flowing direction is not fixed. Therefore, the exhaust gas is restricted from continuously and locally striking the inlet of the exhaust gas purification catalyst, and the exhaust gas is allowed to strike a larger area of the inlet. This limits local clogging of the exhaust gas purification catalyst. Under this situation, the flow rate of the exhaust gas that flows through the port remains unchanged while the open degree of the wastegate valve changes. This accurately limits local clogging of the exhaust gas purification catalyst.

In this case, when the open degree of the valve is changed, preferably, the open degree is changed whenever a predetermined period elapses.

In this structure, the portion in the inlet of the exhaust gas purification catalyst that the exhaust gas strikes changes whenever a predetermined period elapses. This simplifies the control configuration for changing the open degree of the valve. In this case, it is desirable that the open degree of the valve be changed in a stepped manner.

Preferably, while controlling the open degree of the valve based on a running state of the engine, when the open degree of the valve, which is set based on the running state of the engine, is greater than or equal to the minimum open degree, the open degree of the valve is changed in a range greater than or equal to the minimum open degree.

In this structure, the open degree of the wastegate valve is controlled based on the engine running state, and the boost pressure is controlled accordingly in a preferred manner. Further, in the above structure, when the open degree of the wastegate valve, which is set based on the engine running state, is greater than or equal to the minimum open degree, the open degree of the wastegate valve changes in a range greater than or equal to the minimum open degree. This accurately limits local clogging of the exhaust gas purification catalyst without hindering the control of the boost pressure.

In this case, when the internal combustion engine, which serves as a driving source of a vehicle, is installed in the vehicle and the vehicle is travelling at a high constant speed, preferably, the open degree of the valve is changed in a range greater than or equal to the minimum open degree.

In an internal combustion engine installed in a vehicle, a metal such as manganese included in an exhaust gas tends to be deposited on an exhaust gas purification catalyst especially when the vehicle is travelling at a high constant speed. In such a case, the open degree of the wastegate valve is set to be greater than or equal to the minimum open degree. Therefore, the above structure accurately limits local deposition of a metal such as manganese on the exhaust gas purification catalyst.

In addition, preferably, the exhaust passage includes a bent connector that connects the turbine to the exhaust gas purification catalyst, the port, which is aligned with an outlet of the turbine, and the exhaust gas purification catalyst are located at opposite sides of a rotation axis of the turbine wheel, and the valve is a flap-type valve that opens in a downstream direction of the exhaust gas about a pivot point located at a side of the port opposite to the rotation axis.

Due to limitations imposed on the layout of the exhaust system, an internal combustion engine may include an exhaust passage in which a connector is bent between a turbine and an exhaust gas purification catalyst. In the above structure, the port of a wastegate mechanism, which is aligned with the outlet of the turbine, and the exhaust gas purification catalyst are located at opposite sides of the rotation axis of the turbine wheel. Additionally, the valve is a flap-type valve that opens in the downstream direction of the exhaust gas about a pivot point located at a side of the port opposite to the rotation axis. Thus, the exhaust gas directly strikes the exhaust gas purification catalyst when the valve opens. This facilitates the warming of the exhaust gas purification catalyst. When the present invention is applied to an internal combustion engine having such a structure, exhaust gas strikes a larger area of the inlet of the exhaust gas purification catalyst. Consequently, this limits local clogging of the exhaust gas purification catalyst.

### BRIEF DESCRIPTION OF THE DRAWINGS

Fig. 1 is a cross-sectional view showing the cross-sectional structure of an exhaust passage and a turbine in relation to a control device for an internal combustion engine according to one embodiment of the present invention.
Fig. 2 is a graph showing one example of the relationship between the open degree of a wastegate valve and the flow rate of an exhaust gas flowing through a wastegate port of the embodiment.
Fig. 3 is a flowchart showing the procedures executed to control the open degree of the wastegate valve of the embodiment.
Fig. 4 is a cross-sectional view showing the cross-sectional structure of the exhaust passage and the turbine to illustrate the operation of the embodiment.

### EMBODIMENTS OF THE INVENTION

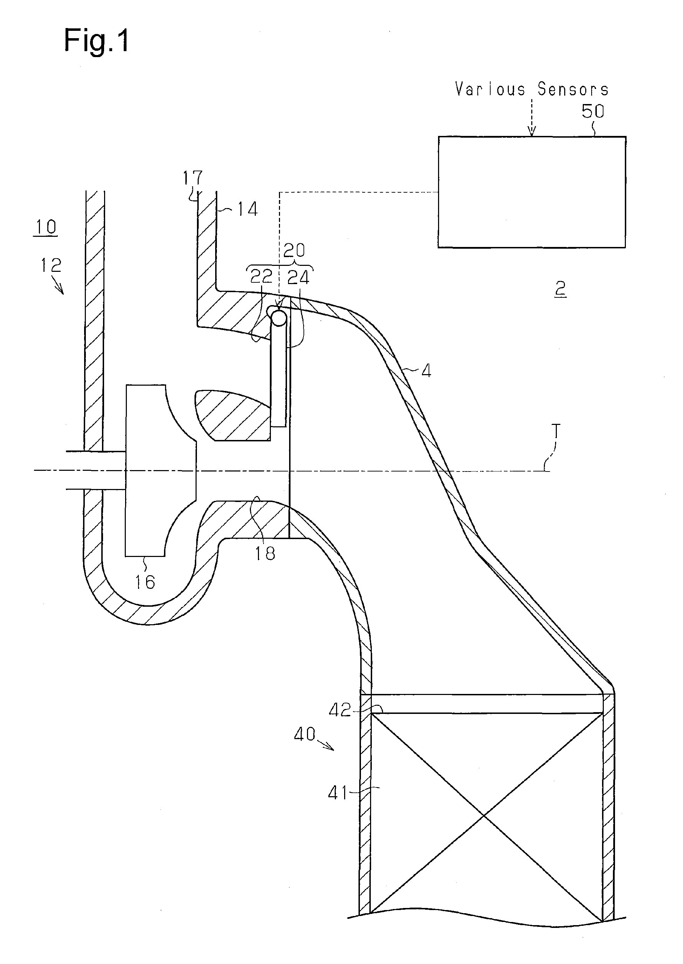

One embodiment of the present invention that is employed as a control device for an internal combustion engine installed in a vehicle will now be described with reference to Figs. 1 to 4.

Fig. 1 shows the cross-sectional structure of an exhaust passage where a turbine is located in an internal combustion engine of the present embodiment.

As shown in Fig. 1, an internal combustion engine is a driving source for a vehicle, and an exhaust passage 2 of the internal combustion engine includes, in order from the upstream side, a turbine 12, a connector 4, and a catalytic converter 40.

The turbine 12 includes a turbine housing 14 and a turbine wheel 16, which is encased in the turbine housing 14. The rotation axis T of the turbine wheel 16 extends in the right-left direction of the drawing. A compressor wheel is axially connected to the turbine wheel 16. The compressor wheel is rotationally driven when the turbine wheel 16 is rotationally driven.

An inlet 17 of the turbine housing 14 is connected to an exhaust manifold.

The connector 4, which is connected to an outlet 18 of the turbine housing 14, is bent at an intermediate position and extends downward as viewed in the drawing. The connector 4 is also connected to the catalytic converter 40.

A porous exhaust gas purification catalyst 41, which purifies the exhaust gas, is arranged inside the catalytic converter 40.

The turbine housing 14 incorporates a wastegate mechanism 20, which allows the exhaust gas to bypass the turbine wheel 16 and be discharged. More specifically, a wastegate port 22, which serves as a passage that bypasses the turbine wheel 16, is formed inside the turbine housing 14. The wastegate port 22 is formed above the rotation axis T of the turbine wheel 16 as viewed in the drawing. That is, the wastegate port 22 and the exhaust gas purification catalyst 41 are located at opposite sides of the rotation axis T of the turbine wheel 16. Also, the wastegate port 22 is aligned, in a direction orthogonal to the rotation axis T, with the outlet 18 of the turbine 12, which lies along the rotation axis T of the turbine wheel 16. A wastegate valve 24, which is electrically driven to open and close the wastegate port 22, is arranged inside the turbine housing 14. The wastegate valve 24 is a flap-type valve that pivotally opens in a downstream direction of the exhaust gas. The pivot point of the wastegate valve 24 is located at the side of the wastegate port 22 opposite to the rotation axis T. In the wastegate mechanism 20 having such a structure, exhaust gas directly strikes the exhaust gas purification catalyst 41 when the wastegate valve 24 opens. This facilitates the warming of the exhaust gas purification catalyst 41.

In this manner, the wastegate port 22 and the wastegate valve 24 form the wastegate mechanism 20. Further, the turbine 12 and the wastegate mechanism 20 form a turbocharger (hereinafter, forced induction device 10).

An electronic control unit 50 executes a variety of controls in the internal combustion engine including the control of the open degree of the wastegate valve 24. The electronic control unit 50, which functions as a controller, includes a central processing unit (CPU) that performs calculations related to various controls, a read-only memory (ROM) that stores programs and data for various controls, and a random access memory (RAM) that temporarily stores calculation results and the like. The electronic control unit 50 reads detection signals from various sensors, performs various calculations, and controls the engine based on the results.

The various sensors include an engine speed sensor that detects the engine speed, a throttle sensor that detects the depression amount of an accelerator, an air flow sensor that detects the amount of the intake air, a vehicle speed sensor that detects the traveling speed of the vehicle, a boost pressure sensor that detects the boost pressure, a coolant temperature sensor that detects the temperature of a coolant, and the like.

The electronic control unit 50 performs various calculations based on signals output from the sensors and executes various controls on the internal combustion engine based on the calculation results.

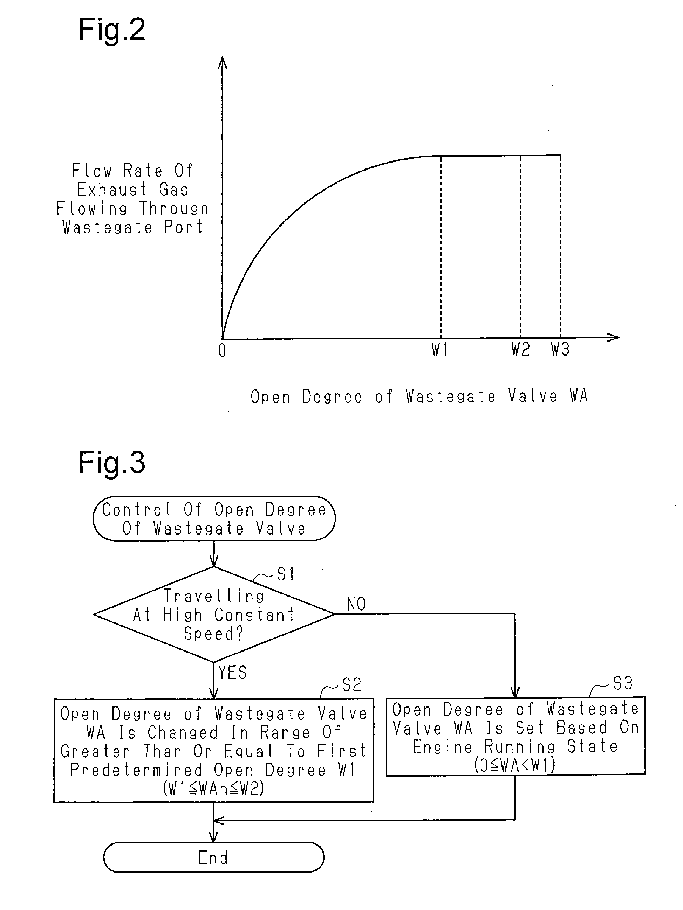

Fig. 2 shows one example of the relationship between the open degree WA of the wastegate valve 24 and the flow rate of the exhaust gas flowing through the wastegate port 22.

The physical maximum value of the open degree WA of the wastegate valve 24 is defined as a third predetermined open degree W3. As shown in Fig. 2, as the open degree WA of the wastegate valve 24 increases, the flow rate of the exhaust gas flowing through the wastegate port 22 increases accordingly. However, when the open degree WA of the wastegate valve 24 is greater than or equal to a first predetermined open degree W1, which is smaller than the third predetermined open degree W3, the flow rate of the exhaust gas flowing through the wastegate port 22 increases only slightly when the open degree WA is increased.

Taking this tendency into account, in the present embodiment, when controlling the open degree of the wastegate valve 24, the open degree WA of the wastegate valve 24 is basically set within a range from the fully closed state (WA=0) to the first predetermined open degree W1.

For example, when the depression amount of the accelerator is increased at a low boost pressure, the wastegate valve 24 is set to fully close. This allows the pressure of the exhaust gas to be actively applied to the turbine wheel 16, which in turn, increases the rotation speed of the compressor wheel. As a result, the boost pressure increases, and the engine output increases.

When the vehicle is travelling at a high constant speed, the boost pressure is already high. Therefore, the open degree WA of the wastegate valve 24 is set to the first predetermined open degree W1. In this manner, the exhaust gas may be actively discharged through the wastegate port 22. This avoids the application of an excessive pressure of the exhaust gas to the turbine wheel 16 and limits excessive increases of the boost pressure.

In the present embodiment, when a vehicle is travelling at a high constant speed, the open degree WA of the wastegate valve 24 is changed in a range that is greater than or equal to the first predetermined open degree W1. This accurately limits local clogging of the exhaust gas purification catalyst 41 without hindering the control of the boost pressure.

The control of the open degree of the wastegate valve 24 will now be described with reference to Fig. 3. Fig. 3 is a flowchart showing the procedures executed to control the open degree of the wastegate valve 24 of the present embodiment. The series of processes shown in the flowchart is repeatedly executed by the electronic control unit 50 in a predetermined cycle when the engine is running.

As shown in Fig. 3, in the series of processes, first, it is determined whether or not the vehicle is traveling at a high constant speed state (step S1). Specifically, it is determined based on signals output from the vehicle speed sensor that the vehicle is travelling at a high constant speed when the vehicle speed is greater than or equal to a predetermined value (for example, 100 kilometers) and the speed variation of the vehicle speed is less than or equal to a predetermined value. If the result indicates that the vehicle is not travelling at a high constant speed (step S1: NO), the processing proceeds to step S3, and the open degree WA of the wastegate valve 24 is set based on the driving state of the engine (0≤WA<W1). Then, the series of processes are temporarily terminated.

In step S1, if the vehicle is travelling at a high constant speed (step S1: YES), the processing proceeds to step S2, and the open degree WA of the wastegate valve 24 is changed in a range that is greater than or equal to the first predetermined open degree W1. Then, the series of processes are temporarily terminated. Here, the open degree WA of the wastegate valve 24 is set so that the open degree WA of the wastegate valve 24 changes in a stepped manner between the first predetermined open degree W1 and a second predetermined open degree W2 whenever a predetermined period elapses (for example, 1 second) (W1≤ W≤ W2). More specifically, the open degree WA of the wastegate valve 24 is gradually increased from the first predetermined open degree W1 by a predetermined change amount ΔW whenever the predetermined period elapses. When the open degree WA of the wastegate valve 24 reaches the second predetermined open degree W2, the open degree WA of the wastegate valve 24 is gradually decreased from the second predetermined open degree W2 by the predetermined change amount ΔW whenever the predetermined period elapses.

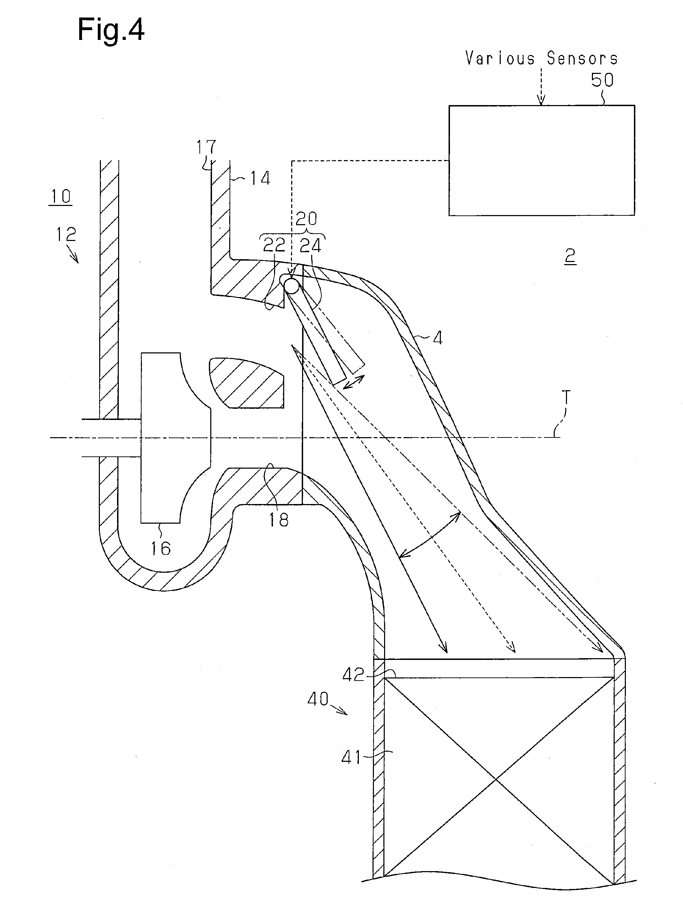

The operation of the present embodiment will now be described with reference to Fig. 4. In Fig. 4, the position of the wastegate valve 24 and the direction of the exhaust gas flowing through the wastegate valve 24 when the open degree of the wastegate valve 24 is the first predetermined open degree W1 are indicated by solid lines. Also, in Fig. 4, the position of the wastegate valve 24 and the direction of the exhaust gas flowing through the wastegate valve 24 when the open degree of the wastegate valve 24 is the second predetermined open degree W2 are indicated by double-dashed lines.

The open degree WA of the wastegate valve 24 is controlled based on a driving state of the engine, and accordingly, the boost pressure is suitably controlled.

When the vehicle is travelling a high constant speed, a metal such as manganese included in the exhaust gas tends to be deposited on the exhaust gas purification catalyst 41. Under such a condition, in the present embodiment, as shown in Fig. 4, the open degree WA of the wastegate valve 24 changes in a range that is greater than or equal to the first predetermined open degree W1. Thus, the flow direction of the exhaust gas discharged through the wastegate port 22 changes and is not fixed. This limits continuous striking of the exhaust gas locally at the inlet 42 of the exhaust gas purification catalyst 41, so that the exhaust gas strikes the inlet 42 over a wider area. This limits the local deposition of a metal such as manganese on the exhaust gas purification catalyst 41 and limits local clogging of the exhaust gas purification catalyst 41. Further, under this situation, the flow rate of the exhaust gas flowing through the wastegate port 22 remains unchanged even when the open degree of the wastegate valve 24 is changed.

In the present embodiment, the first predetermined open degree W1 corresponds to the minimum open degree according to the present invention.

The control device for the internal combustion engine of the present embodiment has the advantages described below.
(1) The first predetermined open degree W1 is set to the minimum value of the wastegate valve 24 at which the flow rate of the exhaust gas flowing through the wastegate port 22 stops increasing when the open degree WA of the wastegate valve 24 is further changed toward the opening side. The electronic control unit 50 controls the open degree WA of the wastegate valve 24 based on the engine running state. Further, the electronic control unit 50 changes the open degree of the wastegate valve 24 in a range greater than or equal to the first predetermined open degree W1 when the vehicle is travelling at a high constant speed. This structure limits local clogging of the exhaust gas purification catalyst 41 without hindering the control of the boost pressure.
(2) When changing the open degree WA of the wastegate valve 24, the open degree WA is changed in a stepped manner whenever a predetermined period elapses. In such a configuration, the portion of the inlet 42 of the exhaust gas purification catalyst 41 that the exhaust gas strikes changes in a stepped manner whenever a predetermined period elapses. This simplifies the control configuration for changing the open degree WA of the wastegate valve 24.
(3) In the exhaust passage 2, the connector 4, which connects the turbine 12 to the exhaust gas purification catalyst 41, is bent. The wastegate port 22, which is aligned with the outlet 18 of the turbine 12, and the exhaust gas purification catalyst 41 are located at opposite sides of the rotation axis T of the turbine wheel 16. The wastegate valve 24 is a flap-type valve that pivotally opens in the downstream direction of the exhaust gas. The pivot point of the wastegate valve 24 is located at the side of the wastegate port 22 opposite to the rotation axis T. This structure facilitates the warming of the exhaust gas purification catalyst 41 and limits local clogging of the exhaust gas purification catalyst 41.

The control device for the internal combustion engine according to the present invention is not limited to the structure illustrated in the above embodiment. The above embodiment may be modified as described below.

In the above embodiment, in the process of step S2 shown in the flowchart of Fig. 3, the open degree WA of the wastegate valve 24 is changed in a stepped manner whenever the predetermined period elapses. Instead, the flow amount of the exhaust gas may be summed, and the open degree WA of the wastegate valve 24 may be changed whenever the summed value reaches a predetermined value.

The above embodiment illustrates the electrically driven wastegate valve 24. Instead, the wastegate valve may be a hydraulically driven valve or a vacuum operated valve.

The above embodiment employs the bent connector 4. However, the layout in the exhaust gas system of the internal combustion engine is not limited to this structure. A straight connector may be employed.

The above embodiment illustrates the wastegate mechanism 20 that is incorporated in the turbine housing 14. Instead, the wastegate mechanism may be located outside the turbine housing.

In the above embodiment, when the vehicle is travelling at a high constant speed, the open degree WA of the wastegate valve 24 is changed in a range that is greater than or equal to the first predetermined open degree W1. However, the present invention is not limited to this configuration. The open degree WA of the wastegate valve 24 may be changed in the range greater than or equal to the first predetermined open degree W1 in a different engine running state.

In the above embodiment, when the open degree WA of the wastegate valve 24 is changed, the open degree WA is changed whenever a predetermined period elapses. Instead, the duration of each open degree may be set to be variable in correspondence with the open degree of the wastegate valve 24. In this case, it is desirable that the relationship between the open degree of the wastegate valve and the duration of the open degree is set based on experiments or the like conducted in advance so that exhaust gas evenly strikes each portion in the inlet of an exhaust gas purification catalyst.

Further, when changing the open degree of the wastegate valve, the open degree may be continuously changed.

In the above embodiment and the modified examples, when the open degree WA of the wastegate valve 24, which is set based on the driving state of the engine, is the first predetermined open degree W1 (minimum open degree), the open degree of the wastegate valve 24 is changed in a range that is greater than or equal to the first predetermined open degree W1. Instead, when the open degree WA of the wastegate valve 24, which is set based on the engine running state, is an open degree that is slightly toward the closing side from the first predetermined open degree W1, the open degree of the wastegate valve 24 may be changed in a range greater than or equal to the first predetermined open degree W1. In this case, although the control of the boost pressure is slightly hindered, local clogging of the exhaust gas purification catalyst 41 is accurately limited.

Also, in the above embodiment and the modified examples, based on whether or not the vehicle is traveling at a high constant speed, it is determined whether or not to change the open degree WA of the wastegate valve 24 in a range greater than or equal to the first predetermined open degree W1 (refer to step S1 of the flowchart in Fig. 3). Instead, if the open degree WA of the wastegate valve 24 is set at the first predetermined open degree W1, the open degree WA of the wastegate valve 24 may be changed in a range greater than or equal to the first predetermined open degree W1 even when the vehicle is traveling at high speed under a high load. For example, when a vehicle is towing an object while climbing a hill, the vehicle speed is low but the engine load is high. In this case, the open degree WA of the wastegate valve 24 is changed in a range greater than or equal to the first predetermined open degree W1. This accurately limits local clogging of the exhaust gas purification catalyst 41.

### DESCRIPTION OF REFERENCE SYMBOLS

- 2: Discharge Passage
- 4: Connector
- 10: Forced Induction Device
- 12: Turbine
- 14: Turbine Housing
- 16: Turbine Wheel
- 17: Inlet
- 18: Outlet
- 20: Wastegate Mechanism
- 22: Wastegate Port (Port)
- 24: Wastegate Valve (Valve)
- 40: Catalytic Converter
- 41: Exhaust Gas Purification Catalyst
- 42: Inlet
- 50: Electronic Control Unit

## Claims

1. A control device for an internal combustion engine, wherein the internal combustion engine includes a turbocharger and an exhaust gas purification catalyst, the turbocharger includes a turbine arranged in an exhaust passage and a wastegate mechanism including a port, which bypasses a turbine wheel of the turbine, and a valve, which opens and closes the port, the exhaust gas purification catalyst is located at a downstream side of the turbine with respect to exhaust gas, and the control device controls an open degree of the valve, wherein
when the engine is running, the open degree of the valve is changed in a range greater than or equal to a minimum open degree that is a minimum value of the open degree of the valve at which a flow rate of the exhaust gas flowing through the port stops increasing when the open degree of the valve is changed to an opening side.

2. The control device for the internal combustion engine according to claim 1, wherein when the open degree of the valve is changed, the open degree is changed whenever a predetermined period elapses.

3. The control device for the internal combustion engine according to claim 1 or 2, wherein while controlling the open degree of the valve based on a running state of the engine, when the open degree of the valve, which is set based on the running state of the engine, is greater than or equal to the minimum open degree, the open degree of the valve is changed in a range greater than or equal to the minimum open degree.

4. The control device for the internal combustion engine according to claim 3, wherein
the internal combustion engine, which serves as a driving source of a vehicle, is installed in the vehicle, and
the open degree of the valve is changed in a range greater than or equal to the minimum open degree when the vehicle is travelling at a high constant speed.

5. The control device for the internal combustion engine according to any one of claims 1 to 4, wherein
the exhaust passage includes a bent connector that connects the turbine to the exhaust gas purification catalyst,
the port, which is aligned with an outlet of the turbine, and the exhaust gas purification catalyst are located at opposite sides of a rotation axis of the turbine wheel, and
the valve is a flap-type valve that opens in a downstream direction of the exhaust gas about a pivot point located at a side of the port opposite to the rotation axis.
